# EUROPEAN PATENT APPLICATION

(11) **EP 4 181 259 A1**
(43) Date of publication of application: **17.05.2023**
(21) Application number: 22205475.1
(22) Date of filing: 04.11.2022
(51) Int. Cl.: H01M 10/054, H01M 50/414, H01M 50/42, H01M 50/423, H01M 50/426, H01M 50/44, H01M 50/449

(54) **ALUMINUM BATTERY SEPARATOR**

(30) Priority: 10.11.2021 TW 110141778
(71) Applicant: APh ePower Co., Ltd., Kaohsiung City 821 (TW)
(72) Inventor: WU, Jui-Hsuan, 821 Kaohsiung City (TW); CHOU, Li-Hsien, 821 Kaohsiung City (TW); YANG, Chun-Chieh, 821 Kaohsiung City (TW)
(74) Representative: Becker, Eberhard

(57) **Abstract**

An aluminum battery separator (10) applied between a positive electrode (102, 104) and a negative electrode (104) of an aluminum battery (100) includes a polymer material layer. An electrolyte is included between the positive electrode (102, 104) and the negative electrode (104) of the aluminum battery (100). The polymer material layer includes one or more polymer materials, and the aluminum battery separator (10) does not include a glass fiber material.

## Description

### BACKGROUND

### Technical Field

The disclosure relates to a battery separator, and more particularly, to an aluminum battery separator.

### Description of Related Art

Generally speaking, an aluminum battery is composed of an aluminum negative electrode, a separator, a positive electrode, and an electrolyte, and an aluminum battery separator is often made of a glass fiber material. As a result, during the continuous charging and discharging process, the electrolyte generates metal deposition on the negative electrode and the aluminum battery separator through a redox, which further generates metal dendrites and leads to the failure of the aluminum battery separator due to the conduction of the positive and negative electrodes. In addition, since the aluminum battery separator often dissolves in the electrolyte, the positive electrode and the negative electrode cannot be effectively blocked, and these factors all affect the performance and life of the aluminum battery.

### SUMMARY

The disclosure provides an aluminum battery separator, which effectively improves the performance and life of the aluminum battery.

An aluminum battery separator applied between a positive electrode and a negative electrode of an aluminum battery of the disclosure includes a polymer material layer, in which an electrolyte is included between the positive electrode and the negative electrode of the aluminum battery. The polymer material layer includes one or more than one polymer material, and the aluminum battery separator does not include a glass fiber material.

In an embodiment of the disclosure, the above-mentioned polymer material includes a benzene ring structure polymer material or a perfluoro-substituted polymer material.

In an embodiment of the disclosure, the above-mentioned polymer material is selected from polyethylene terephthalate (PET), poly(ether sulfones) (PES), polycarbonate (PC), polytetrafluoroethylene (PTFE), and polyimide (PI).

In an embodiment of the disclosure, the above-mentioned polymer material does not include polyethylene (PE) and polypropylene (PP).

In an embodiment of the disclosure, the above-mentioned polymer material includes a polymer film pore-forming material or a polymer fiber material.

In an embodiment of the disclosure, a pore size of a polymer film material is at least less than 20 micrometers (µm).

In an embodiment of the disclosure, the pore size of the above-mentioned polymer film material is 0.03 µm to 20 µm.

In an embodiment of the disclosure, a fiber diameter of a fiber material of the above-mentioned polymer material is at least less than 20 µm.

In an embodiment of the disclosure, the fiber diameter of the fiber material of the above-mentioned polymer material is 0.1 µm to 20 µm.

In an embodiment of the disclosure, the above-mentioned polymer material layer is a single-layer structure or a multi-layer structure.

Based on the above, the disclosure selects the material of the aluminum battery separator, so that the aluminum battery separator does not include a glass fiber material, and selects a polymer material layer including one or more than one polymer material, so the aluminum battery separator can effectively alleviate metal deposition, slow down dendrite puncture, avoid mutual conduction between the positive electrode and the negative electrode, and improve the chemical resistance to the electrolyte, thereby effectively improving the performance and life of the aluminum battery.

In order to make the above-mentioned and other features and advantages of the disclosure easier to understand, the following embodiments are given and described in detail with the accompanying drawings as follows.

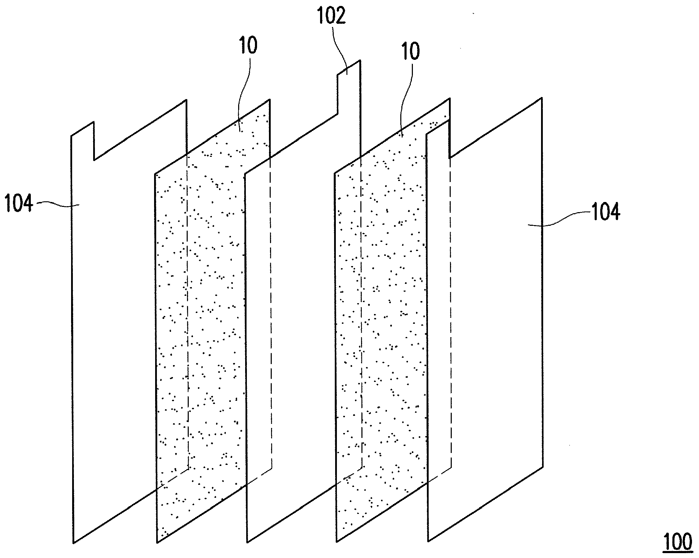

### BRIEF DESCRIPTION OF THE DRAWING

FIGURE is a schematic partial side view of an aluminum battery separator applied to an aluminum battery according to an embodiment of the disclosure.

### DESCRIPTION OF THE EMBODIMENTS

In order to make the content of the disclosure more comprehensible, the following specific embodiments are given to exemplify the implementation of the disclosure. For the sake of clarity, many of the practical details are described altogether in the following. It should be understood, however, that these practical details should not be taken to limit the disclosure. That is, in some embodiments of the disclosure, these practical details are unnecessary.

Unless otherwise defined, all terms (including technical and scientific terms) used herein have the same meaning as commonly understood by those ordinarily skilled in the art.

FIGURE is a schematic partial side view of an aluminum battery separator applied to an aluminum battery according to an embodiment of the disclosure. Referring to FIGURE, an aluminum battery separator 10 of the embodiment is applied between a positive electrode 102 and a negative electrode 104 of an aluminum battery 100, and an electrolyte may also be included between the positive electrode 102 and the negative electrode 104 of the aluminum battery 100, so the aluminum battery separator 10 is a material that can be immersed in the electrolyte. Here, the material of the positive electrode 102 can be a carbon material or a metal foil coated with a carbon material, and the electrolyte can be an ionic liquid, but is not limited by the disclosure, and the material of the positive electrode 102 and the electrolyte can be selected according to actual design requirements.

Further, in the embodiment, the material of the aluminum battery separator 10 is selected so that the aluminum battery separator 10 does not include a glass fiber material, and a polymer material layer including one or more than one polymer material is selected. Therefore, the aluminum battery separator 10 can effectively alleviate metal deposition, slow down dendrite puncture (such as the dendrites grown in the negative electrode 104 in FIGURE are blocked by the aluminum battery separator 10 and do not extend to the positive electrode 104 ), avoid mutual conduction between the positive electrode 102 and the negative electrode 104, and improve the chemical resistance to the electrolyte, thereby effectively improving the performance and life of the aluminum battery 100.

It should be noted that examples of the polymer material layer are listed below for description, but the disclosure should not be construed in a limited way in terms of the materials described below, and the same or equivalent materials as the materials described below all belong to the protection scope of the disclosure.

In some embodiments, the polymer material layer of the aluminum battery separator 10 includes a benzene ring structure polymer material or a perfluoro-substituted polymer material. For example, the polymer material can be selected from PET, PES, PC, PTFE, and PI. In addition, the polymer material may not include PE and PP, and the above-mentioned material selection can effectively improve the chemical resistance of the aluminum battery separator 10 to the electrolyte, but the disclosure is not limited hereto.

In some embodiments, the polymer material includes a polymer film pore-forming material or a polymer fiber material, in which the pore size of the polymer film material is at least less than 20 µm. For example, the pore size of the polymer film material can be 0.03 µm to 20 µm (such as, 0.03 µm, 0.05 µm, 1 µm, 5 µm, 10 µm, 20 µm, or any value within the above-mentioned 0.03 µm to 20 µm). The fiber diameter of the fiber material of the polymer material can be at least less than 20 µm. For example, the fiber diameter of the fiber material of the polymer material can be 0.1 µm to 20 µm (such as, 0.1 µm, 0.2 µm, 1 µm, 5 µm, 10 µm, 20 µm, or any value within the above-mentioned 0.1 µm to 20 µm), but the disclosure is not limited hereto. The pore size of the polymer film material and the fiber diameter of the fiber material can be adjusted according to the actual design requirements.

In the following, the aluminum battery separator of different polymer materials was cut into sheets with a length of 5 cm and a width of 1 cm, and then the sheets were immersed in the electrolyte and placed at room temperature (25°C) and high temperature (80°C). The chemical resistance of the aluminum battery separator in the electrolyte was tested, in which the results are shown in Table 1 and the following conclusions are drawn: the PP material and the PE material were dissolved in the electrolyte (ionic liquid) within 4 days at room temperature. Therefore, the application of the PP material and the PE material on the aluminum battery separator cannot achieve the required chemical resistance, while PET, PES, PC, PTFE, or PI are insoluble in the electrolyte (ionic liquid) at room temperature or can be placed in the electrolyte (ionic liquid) for many days, so the application of the above materials on the aluminum battery separator can effectively achieve the required chemical resistance. In addition, when the experiment is further conducted at high temperature, compared with PP and PE, PET, PES, PC, PTFE, or PI can also have a certain chemical resistance.

**Table 1**

| Material | Brand and product name | Days to dissolve at normal temperature | Days to dissolve at high temperature |
|---|---|---|---|
| PP | FORESIGHT ENERGY TECHNOLOGIES CO., LTD., Multi-layer Separator | 4 days | <1 day |
| PE | SHINING ENERGY CO., LTD., W-SCOPE | 4 days | <1 day |
| PES | KUN SAN CO., LTD., MSPES260022 | >30 days | 1 day |
| PET (film pore-forming material) | NAN YA PLASTICS CORPORATION, DP48R | Insoluble (>2 months) | 50 days |
| PET (fiber material) | TEIJIN LIMITED, NF2(60)02(40)-15 | >30 days | 4 days |
| PTFE | EF-MATERIALS INDUSTRIES INC., EFMaflon^{®} | Insoluble (>2 months) | insoluble |
| PC | WAH LEE INDUSTRIAL CORP., Lexan 8010MC-112 | Insoluble (>2 months) | 14 days |
| PI | Mortech Corporation, PIN050 | Insoluble (>2 months) | insoluble |

In some embodiments, the polymer material layer of the aluminum battery separator 10 can be a single-layer structure or a multi-layer structure, that is, the polymer material layer of the aluminum battery separator 10 can be used alone or stacked for the thickness required according to actual needs and is flexible to use, but the disclosure is not limited hereto.

Hereinafter, with reference to Example 1 to Example 6, Comparative Example 1, and Comparative Example 2, the efficacy of the aluminum battery separator of the disclosure applied to the aluminum battery will be described in more detail. In addition, although the following Example 1 to Example 6 are described, the details of the materials used and the procedures can be appropriately changed without departing from the scope of the disclosure, and Example 1 should not be construed as limiting the disclosure.

### <Example 1>

First, an aluminum foil was used for cutting to obtain a negative electrode (with thickness of 0.05 mm and size of 88 mm x 148 mm), and a graphite slurry was coated on a nickel foil (with thickness of 0.03 mm and size of 85 mm x 145 mm) to obtain a positive electrode. Next, a polymer material layer (a PES filtrate film with a pore size of 0.22 µm) was cut to obtain an aluminum battery separator. Then, according to the order of the negative electrode, the separator, and the positive electrode, an aluminum plastic film was placed and then an electrolyte (aluminum chloride/1-ethyl-3-methylimidazolium chloride, in which the molar ratio was 2:1) was filled for packaging to obtain the aluminum battery of Example 1.

### <Example 2>

An aluminum battery of Example 2 is similar to the aluminum battery of Example 1, except that the aluminum battery separator used a different polymer material layer (a PES filtrate film, with a pore size of 0.45 µm).

### <Example 3>

An aluminum battery of Example 3 is similar to the aluminum battery of Example 1, except that the aluminum battery separator used a different polymer material layer (a PES filtrate film, with a pore size of 0.80 µm).

### <Example 4>

An aluminum battery of Example 4 is similar to the aluminum battery of Example 1, except that the aluminum battery separator used a different polymer material layer (a PET non-woven fabric, with a fiber diameter of 0.2 µm).

### <Example 5>

An aluminum battery of Example 5 is similar to the aluminum battery of Example 1, except that the aluminum battery separator further used a different polymer material layer (a PET non-woven fabric, with a fiber diameter of 0.2 µm) to stack with a polymer material layer (a PES filtrate film, with a pore size of 0.22 µm).

### <Example 6>

The aluminum battery of Example 6 is similar to the aluminum battery of Example 1, except that the aluminum battery separator used a different polymer material layer (a PTFE filter film, with a pore size of 0.45 µm).

### <Comparative Example 1>

The aluminum battery of Comparative Example 1 is similar to the aluminum battery of Example 1, except that the aluminum battery separator used only a glass fiber filter paper (with thickness of 400 µm).

### <Comparative Example 2>

The aluminum battery of Comparative Example 2 is similar to the aluminum battery of Comparative Example 1, except that the aluminum battery separator only used a glass fiber filter paper (with thickness of 200 µm).

The performance of the life of Example 1 to Example 6, Comparative Example 1, and Comparative Example 2 was tested, and a charge-discharge test was conducted on the aluminum battery obtained from Example 1 to Example 6, Comparative Example 1, and Comparative Example 2 with a charger-discharger (Chroma 6V30A) of Chroma Electronics. The coulombic efficiency was measured at a charge-discharge rate of 4C, and the number of turns when the coulombic efficiency was lower than 80% was calculated. The results are shown in Table 2. From the results of Example 1 to Example 6, Comparative Example 1, and Comparative Example 2, the following conclusions can be drawn: the cycle life of the aluminum battery is effectively improved through the selection of the polymer material for the aluminum battery separator. Specifically, compared with Comparative Example 1 and Comparative Example 2, the cycle life of Example 1 to Example 6 is increased by 1 to 4 times, and the combination of different polymer materials used in Example 5 also reduces the speed of piercing of the aluminum dendrite in the fiber. In addition, when comparing Example 1 to Example 3, the aluminum battery separator using the polymer material layer with a smaller pore size has a more significant ability to prolong the life of the aluminum battery, but the disclosure is not limited hereto.

**Table 2**

| Aluminum battery | Number of turns when the coulombic efficiency is lower than 80% |
|---|---|
| Example 1 | 188 |
| Example 2 | 103 |
| Example 3 | 86 |
| Example 4 | 76 |
| Example 5 | 177 |
| Example 6 | 244 |
| Comparative Example 1 | 73 |
| Comparative Example 2 | 11 |

To sum up, the disclosure selects the material of the aluminum battery separator, so that the aluminum battery separator does not include a glass fiber material, and selects the polymer material layer including one or more than one polymer material, so the aluminum battery separator can effectively alleviate metal deposition, slow down dendrite puncture, avoid mutual conduction between the positive electrode and the negative electrode, and improve the chemical resistance to the electrolyte, thereby effectively improving the performance and life of the aluminum battery.

## Claims

1. An aluminum battery separator (10), applied between a positive electrode (102, 104) and a negative electrode (104) of an aluminum battery (100), and an electrolyte being provided between the positive electrode (102, 104) and the negative electrode (104) of the aluminum battery (100), the aluminum battery separator (10) comprising:
a polymer material layer, wherein the polymer material layer comprises one or more than one polymer material, and the aluminum battery separator (10) does not comprise a glass fiber material.

2. The aluminum battery separator (10) according to claim 1, wherein the polymer material comprises a benzene ring structure polymer material or a perfluoro-substituted polymer material.

3. The aluminum battery separator (10) according to claim 1 or 2, wherein the polymer material is selected from polyethylene terephthalate (PET), poly(ether sulfones) (PES), polycarbonate (PC), polytetrafluoroethene (PTFE), and polyimide (PI).

4. The aluminum battery separator (10) according to any one of claims 1 to 3, wherein the polymer material does not comprise polyethylene (PE) and polypropylene (PP).

5. The aluminum battery separator (10) according to any one of claims 1 to 4, wherein the polymer material comprises a polymer film pore-forming material or a polymer fiber material.

6. The aluminum battery separator (10) according to any one of claims 1 to 5, wherein a pore size of a polymer film material is at least less than 20 µm.

7. The aluminum battery separator (10) according to claim 6, wherein the pore size of the polymer film material is 0.03 µm to 20 µm.

8. The aluminum battery separator (10) according to any one of claims 1 to 7, wherein a fiber diameter of a fiber material of the polymer material is at least less than 20 µm.

9. The aluminum battery separator (10) according to claim 8, wherein the fiber diameter of the fiber material of the polymer material is 0.1 µm to 20 µm.

10. The aluminum battery separator (10) according to any one of claims 1 to 9, wherein the polymer material layer is a single-layer structure or a multi-layer structure.
